(19) **Europäisches Patentamt / European Patent Office / Office européen des brevets**

(11) **EP 1 790 580 B1**

(12) **EUROPEAN PATENT SPECIFICATION**

(45) Date of publication and mention
of the grant of the patent:
**21.04.2010 Bulletin 2010/16**

(51) Int Cl.:
***B65D 41/00*** *(2006.01)*

(21) Application number: **05257308.6**

(22) Date of filing: **28.11.2005**

(54) **Screw cap comprising HDPE**

Schraubkapsel eine Polyethylenkomposition enthaltend

Capsule à visser comprenant une composition à base de polymère d'éthylène

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**30.05.2007 Bulletin 2007/22**

(73) Proprietor: **Borealis Technology Oy**
**06101 Porvoo (FI)**

(72) Inventors:
• **Follestad, Arild**
**3960 Stathelle (NO)**
• **Nord-Varhaug, Katrin**
**3942 Porsgrunn (NO)**

• **Kona, Bala**
**3950 Brevik (NO)**
• **Fell, Hans, Jorg**
**3928 Porsgrunn (NO)**

(74) Representative: **Campbell, Neil Boyd**
**Dehns**
**St Bride's House**
**10 Salisbury Square**
**London**
**EC4Y 8JD (GB)**

(56) References cited:
**EP-A- 1 310 436     US-A- 4 489 845**
**US-A- 4 709 825**

## Description

This invention relates to high density polyethylene (HDPE) caps or closures, to processes for their manufacture, and to particular HDPE compositions useful in the manufacture thereof. In particular, the invention relates to the use of certain multimodal high density polymers ideally suited for the manufacture of caps and closures for non-carbonated and carbonated drinks bottles.

The use of multimodal polyethylene in the manufacture of screw caps and closures for bottles is known (see, for example, US 4489845, US 4709825 and EP 1 310 436, which all relate to screw caps and/or closures for containers). In order to be suitable for use in these applications, it is necessary to use high density polyethylene to provide sufficient stiffness in the cap. EP-A-1468932 and WO00/71615 both describe screw caps formed from multimodal HDPE. These caps are typically prepared by injection moulding.

It will be appreciated that the weight of the cap is very important. Lighter caps are cheaper to produce as less raw material is required and since the volume of production in this field is so vast and margins on cap sales small, any decrease in cap weight is industrially critical.

Lighter caps also means a reduction in cycle time which is also of great importance. Lighter caps will cool more rapidly allowing the injection moulding process to be run more frequently. If therefore a polymer can be made which allows cycle times to be reduced, even by a small amount, more caps can be produced in a given period of time. A typical cycle time for cap manufacture is 4s. Reducing that only by 0.2s allows a further 1100 caps to be produced per day on a single cap line.

Unfortunately, the person skilled in the art is also aware that cap weight cannot simply be reduced. The cap needs to be rigid enough that it does not deform when being taken off and put back on a bottle. The cap needs to have sufficient screw thread that a proper seal with the bottle is achieved. Most importantly, the cap must be able to withstand considerable internal pressure when in use, in particular when packaging carbonated drinks. When packaging carbonated drinks, the presence of carbon dioxide in the bottle exerts considerable pressure on the cap. Typically, caps must be able to withstand 3-4 bars of internal pressure or else they may fail. For this reason, caps currently on the market are of the order of 2 to 2.5 g in weight for a typical 1.4 to 1.5 cm radius cap suitable for a 28 mm neck bottle.

There remains a need therefore to prepare new caps that are light but still have the ability to withstand the considerable internal pressures from within a bottle.

The present inventors have found that certain polymers allow the manufacture of caps which are lighter than those currently on the market whilst still having the necessary stiffness for use in both still and carbonated drinks applications. Lighter caps means cheaper caps and reduced cycle time. It is believed that never before have such lightweight HDPE caps been developed that meet the requirements of drinks bottle manufacturers.

Thus, viewed from one aspect the invention provides a screw cap comprising an HDPE having a density of greater than 940 kg/m$^3$, a tensile modulus greater than 1000 MPa and an MFR$_2$ of 0.3 to 15 g/10min wherein the ratio between the weight of the cap (g) and the area $\pi r^2$ where r is the radius of the inside of the cap (cm) is less than 0.32 g/cm$^2$.

Viewed from another aspect the invention provides a process for the preparation of a cap as hereinbefore described comprising injection moulding an HDPE having a density of greater than 940 kg/m$^3$, a tensile modulus greater than 1000 and an MFR$_2$ of 0.3 to 15 g/10min to form a cap wherein the ratio between the weight of the cap (g) and the area $\pi r^2$ where r is the radius of the inside of the cap (cm) is less than 0.32 g/cm$^2$.

Alternatively viewed, the invention provides a screw cap comprising an HDPE having a density of greater than 940 kg/m$^3$, a tensile modulus greater than 1000 MPa and an MFR$_2$ of 0.3 to 15 g/10min wherein the weight of the cap is less than 2 g.

The caps of the invention comprise high density polyethylene (HDPE). By polyethylene is meant a polymer the majority by weight of which derives from ethylene monomer units. Minor comonomer contributions, e.g. up to 5% by weight more preferably up to 2% by weight, may derive from other copolymerizable monomers, generally C$_{3-20}$, especially C$_{3-10}$, comonomers, particularly singly or multiply ethylenically unsaturated comonomers, in particular C$_{3-10}$ $\alpha$-olefins such as propene, but-1-ene, hex-1-ene, oct-1-ene, 4-methyl-pent-1-ene. Most preferably, the comonomer is but-1-ene or hex-1-ene.

The HDPE used to form the injection moulded article of the invention may be unimodal. Preferably however, the HDPE of the invention should comprise at least two components of differing molecular weight distributions, i.e. the HDPE is multimodal, preferably bimodal.

By bimodal (or multimodal), it is meant that the polymer consists of at least two fractions (components), one of which has a relatively lower molecular weight and a relatively higher density and another of which has a relatively higher molecular weight and a relatively lower density. Typically the molecular weight distribution (MWD) of a polymer produced in a single polymerisation stage using a single monomer mixture, a single polymerisation catalyst and a single set of process conditions (i.e. temperature, pressure.) will show a single maximum, the breadth of which will depend on catalyst choice, reactor choice, process conditions, i.e. such a polymer will be monomodal.

The different components may both be ethylene copolymers or ethylene homopolymers, although preferably at least one of the components is a ethylene copolymer. Preferably the HDPE comprises an ethylene homopolymer and an ethylene copolymer component.

Where one of the components is an ethylene homopolymer, this is preferably the component with the lower weight average molecular weight (Mw).

The term ethylene copolymer is used herein to relate to a polyethylene deriving from ethylene and one or more such copolymerisable comonomers. Copolymers preferably comprise only one comonomer.

By HDPE is meant a polyethylene having a density of greater than 940 kg/m$^3$, e.g. 940 to 980 kg/m$^3$, preferably greater than 945 kg/m$^3$, especially greater than 950 kg/m$^3$ e.g. 950 to 975 kg/m$^3$, especially greater than 960 kg/m$^3$, especially greater than 965 kg/m$^3$, especially greater than 966 kg/m$^3$.

A multimodal, e.g. bimodal polyethylene may be produced by blending two or more monomodal polyethylenes having differently centred maxima in their MWDs. Alternatively and preferably the multimodal polyethylene may be produced by polymerisation using conditions which create a multimodal (e.g. bimodal) polymer product, e.g. using a mixed catalyst system (i.e. two or more different catalysts) or using two or more stage polymerisation process with different process conditions in the different stages or zones (e.g. different temperatures, pressures, polymerisation media, hydrogen partial pressures).

Such a multimodal (e.g. bimodal) HDPE may be produced relatively simply by a multistage ethylene polymerisation, e.g. using a series of reactors, with optional comonomer addition in only the reactor(s) used for production of the higher/highest molecular weight component(s) or differing comonomers used in each stage. Examples of bimodal PE production is given in EP-A-1187876.

If an ethylene homopolymer component is produced by slurry polymerisation involving use of recycled diluent, that diluent may contain small amounts of higher $\alpha$-olefins as contaminants. Likewise where an earlier polymerisation stage has produced an ethylene copolymer component, small amounts of comonomer may be carried over to an ethylene homopolymerization stage. Accordingly, by ethylene homopolymer is meant herein a polymer containing at least 99.5% by weight of ethylene units.

The copolymer component(s) of the HDPE used according to the invention will generally contain at least 0.1% by weight, preferably at least 0.2% by weight of non-ethylene monomer units, e.g. 0.3 to 2 wt%, preferably 0.4 to 1 wt% of such comonomer units. Preferred ethylene copolymers employ alpha-olefins (e.g. $C_{3-12}$ alpha-olefins) as comonomers. Examples of suitable alpha-olefins include but-1-ene, hex-1-ene and oct-1-ene. But-1-ene is an especially preferred comonomer. The polymerisation reactions used to produce the HDPE of use in the caps of the invention may involve conventional ethylene homopolymerization or copolymerization reactions, e.g. gas-phase, slurry phase, liquid phase polymerisations, using conventional reactors, e.g. loop reactors, gas phase reactors, batch reactors. (see for example WO97/44371 and WO96/18662). The catalyst systems used may likewise be any conventional systems, e.g. chromium catalysts, Ziegler-Natta and single site (e.g.metallocene) catalysts, either homogeneous or more preferably heterogeneous catalysts, e.g. catalysts supported on inorganic or organic particulates, in particular on magnesium halides or inorganic oxides such as silica, alumina or silica-alumina. It is preferred to use the same catalyst in all polymerisation stages, e.g. the same single site catalyst or the same Ziegler-Natta catalyst.

For the preparation of the higher molecular weight component, it is especially desirable to use supported Ziegler-Natta catalysts as the molecular weight can then conveniently be controlled using hydrogen. It is also possible to use supported metallocene catalysts as it is straightforward to select desired molecular weights by appropriate selection of particular metallocenes. The metallocenes used will typically be group IVa to VIa metals (in particular Zr or Hf) complexed by optionally substituted cyclopentadienyl groups, e.g. groups carrying pendant or fused substituents optionally linked together by bridging groups. Suitable metallocenes and aluminoxane cocatalysts are widely described in the literature, e.g. the patent publications of Borealis, Hoechst, Exxon.

Most preferably however the HDPE will be prepared using multistage polymerization using a Ziegler-Natta catalyst. Preferred Ziegler Natta catalysts are those described in EP-A-688794. The use of a slurry phase followed by gas phase polymerisation is especially preferred.

The HDPE used to manufacture the caps of the invention preferably has a lower molecular weight component and a higher molecular weight component.

Lower molecular weight component: The lower molecular weight component may have one or more of the following features:

MFR$_2$ of 10-1000 g/10 min, preferably 50-800 g/10 min, especially 50 to 600 g/ 10 min measured according to ISO 1133 at 190°C and under 2.16 kg load;

weight average molecular weight of 10-90 kD, preferably 20-80 kD, especially 30 to 65 kD;

preferably a homopolymer or a copolymer with density higher than 965 kg/m$^3$, most preferably a homopolymer;

comprises 10-90% by weight, preferably 35-65% by weight, especially 45 to 55 wt%, e.g. 50 wt% of the total polyethylene in the composition.

Higher molecular weight component: The higher molecular weight component may have one or more of the following features:

weight average molecular weight of 60-500 kD, preferably 100 to 400kD;
comprises 10-90% by weight, preferably 35-65% by weight of the total polyethylene in the composition, i.e. low mw: high mw component weight ratio is 10:90 to 90:10, preferably 35:65 to 65:35, especially 45 to 55 wt%, e.g. 50 wt%.
a homopolymer, or preferably a copolymer, especially with another $\alpha$-olefin, such as copolymers described herein.

Final polymer composition: The final HDPE polymer composition ( multimodal) may have one or more of the following features:

$MFR_2$ of 0.3-15 g/10 min, preferably 1-10 g/10 min, in particular 2-9 g/10 min, e.g. 5-8 g/10min measured according to ISO 1133 at 190°C and under 2.16 kg load;
weight average molecular weight of at least 50 kD, e.g. at least 80 kD, preferably 80-200 kD, more preferably 90-150 kD;
molecular weight distribution (ratio of the weight average molecular weight to the number average molecular weight) of 3-20, preferably 5-15, more preferably 6-10;
comonomer content of 0.05-2.5% by weight, preferably 0.1-2% by weight, more preferably 0.2 to 1.5 wt% as measured by $C^{13}$ NMR;
crystalline melting point between 125 and 140°C, as determined by DSC analysis;
crystallinity of 60-85%, more preferably 65-80%, as determined by DSC analysis.
tensile modulus of at least 1000 MPa, preferably at least 1100 MPa, especially at least 1200 MPa;
stress at yield of at least 20 MPa, preferably at least 23 MPa, more preferably at least 25 MPa, especially at least 27 MPa;
charpy impact (23°C) of at least 5 kJ/m$^2$, preferably at least 6 kJ/m$^2$, especially at least 7 kJ/m$^2$;
charpy impact (-20°C) of at least 3 kJ/m$^2$, preferably at least 4 kJ/m$^2$, especially at least 5 kJ/m$^2$;
FNCT of at least 15 hours, preferably at least 16 hours.

The HDPE's of the invention show high stiffness at a given density. Thus preferably, the tensile modulus (MPa) of the HDPE's is greater than 27 x (density (in kg/m$^3$)-960) +1050. Thus, for a HDPE of density 966 kg/m$^3$, its tensile modulus is preferably more than 1212 MPa. Alternatively viewed, the tensile modulus parameter A should be greater than 1050 where A is (tensile modulus) - (27 x (density-960)). Preferably A is higher than 1100.

The HDPE's also exhibit very high stress at yield values for a given density. Thus, the stress at yield (MPa) is greater than 0.35 x (density (in kg/m$^3$)-960) + 25. Again therefore, for an HDPE of density 966 kg/m$^3$, its stress at yield is preferably more than 27.1 MPa. Alternatively viewed, the stress at yield parameter B should be at least 25 where B is stress at yield - (0.35 x (density (in kg/m$^3$)-960)). B is preferably at least 25.5.

These high values at a given density mean that the polymers are capable of functioning as caps at light weights.

The charpy impact of the materials is also important. Preferably, the HDPE's possess a charpy parameter C of greater than 10, preferably greater than 11 wherein C =(Charpy at 23°C) x $(MFR_2^{0.3})$.

A further important property of the HDPE of the invention is its rheology. The SHI 1/100 of the HDPE's of the invention should preferably be at least 3.5, especially at least 4, most especially in the range 4.2 to 4.5. SHI 1/100 is a measure of non Newtonian flow and these values are high for HDPE polymers. This means that the polymer has good flow making them ideal for use in injection moulding operations where improved flow can allow the injection moulding cycle time to be reduced. Moreover, these high SHI values can be achieved without affecting MFR.

It is a feature of the polymers of the invention that they possess excellent flow properties at a particular MFR value. This is shown in the examples with reference to a Spiral test in which the polymer material is injected into a spiral mould under certain pressure and the distance travelled by the polymer measured as an indication of its flow properties. Flow is related to the $MFR_2$ of the material. Thus, in a preferred embodiment therefore, the HDPE's of the invention possess a Spiral test parameter E (1000 bar) which is greater than 27 wherein E=(Spiral flow length)*$(MFR_2^{-0.3})$. Preferably E is greater than 28.

Some of the HDPE polymers of the invention are themselves new and form a still further aspect of the invention. Thus, viewed from another aspect, the invention provides a multimodal HDPE composition comprising a lower density ethylene homopolymer component and a higher density ethylene copolymer component with at least one $C_{3-20}$ alpha olefin wherein said HDPE has a density of at least 965 kg/m$^3$, an $MFR_2$ of 0.3 to 10 g/10min, a tensile modulus of at least 1200 MPa.

The use of such an HDPE in the manufacture of any screw cap is also a feature of the invention.

The caps of the invention may contain minor, e.g. up to 10% by weight, preferably up to 5% by weight of other polymers, e.g. other polyolefins in particular polypropylenes. The caps may also contain standard additives such as pigments, nucleating agents, antistatic agents, fillers, antioxidants, anti-blocking agents, slip agents, generally in amounts of up to 1% by weight, preferably up to 0.5% by weight. Preferably however, the HDPE forms at least 90 wt%, especially at least 95 wt%, e.g. the cap consists essentially of the HDPE (i.e. contains only standard additives and HDPE).

Slip agents are of particular importance for caps to allow the cap to turn. Preferred slip agents include erucamide, stearamide, behenamide and mixtures thereof.

The weight of the cap will preferably be below 2 g, e.g. less than 1.9 g, especially less than 1.8 g, e.g. less than 1.75 g. The radius of the inside of the cap may be between 0.75 and 2.5 cm, e.g. 1 to 2 cm depending on the bottle size. Typical bottle caps of use in this invention will have inner diameters of 28 mm to 30 mm, e.g. 29 mm, e.g. radii of 1.4 cm, 1.45 cm or 1.5 cm.

The ratio between the weight of the cap (g) and the area $\pi r^2$ where r is the radius of the inside of the cap (cm) is preferably less than 0.31 $g/cm^2$, more preferably less than 0.30 $g/cm^2$, e.g. less than 0.29 $g/cm^2$, especially less than 0.28 $g/cm^2$., e.g. less than 0.27 $g/cm^2$, most especially less than 0.26 $g/cm^2$. For the avoidance of doubt, a cap is shown below from the side and from below:

Thus, the radius of the inside of the cap is half the length of the arrow "a" which represents the inner diameter of the base of the cap. The measurement should be taken before the cap is fitted onto a bottle and should be taken at the sealing surface of the cap, i.e. the surface which will engage with the top of the bottle neck, i.e. as shown by arrow a.

The length of side "b" may be from 1 to 3 cm, e.g. 1 to 2 cm, especially around 1.4 cm. The thickness of the sides and top of the cap may be 0.5 to 5 mm, e.g. 1 to 2.5 mm.

The caps of the invention will be screw caps, i.e. they are screwed onto the top of a bottle to secure them. Thus, the screw caps possess a threaded closure. Caps are normally made to fit bottles with necks made according to the British Plastic Federation (BPF) standard or the Plastic Closures Only (PCO) standard. BPF closures are made for both plastic and glass bottles whereas PCO closures fit plastic bottles only. A typical BPF or PCO bottle neck is 28 mm in diameter and the caps of the invention preferably fit such bottle necks. The caps of this invention preferably conform to the PCO standard. The screw caps of the invention ideally fit 30/25 high neck or 30/25 low neck water bottles. For reference, PET preform neck finishes are depicted on www.kenplas.com/project/pet/neckfinish.

Screw caps of the invention may comprise a tear strip on the base of the cap. The tear strip detaches from the rest of the cap when the bottle is opened for the first time. The weight to area ratio of claim 1 can be met when the tear strip is present, i.e. the weight of the tear strip is included in the weight of the cap, or when the tear strip is absent. In most embodiments, the tear strip will be present and will be formed during the injection moulding to form the rest of the screw cap. Where a tear strip is present, the weight of the cap will be deemed to include the weight of the tear strip.

The tear strip, when present, will be formed simultaneously with the rest of the cap and will therefore be made of the same material as the rest of the cap.

The caps may also be provided with a liner. The weight of this should not be considered when determining the ratio of the invention.

Caps may also have an inner positioning ring of HDPE designed to fit inside the top of the bottle onto which it is attached to allow easy closure. Such rings are known. The top of the bottle onto which the closure is secured is designed to fit between the inner positioning ring and the sides of the closure. The sides of the cap may be ridged to allow easy gripping of the cap and the cap can carry motifs and be coloured as is also known.

The caps may be used with any container, typically a polyethylene terephthalate (PET) bottle. Such bottles may contain still or carbonated drinks, in particular still or sparkling water, particularly still water. Bottle size of 330 ml to 2 L, especially 500 ml to 1.5L are preferred.

The caps will typically be able to withstand high internal pressures.

The caps of the invention can be made using injection moulding. Injection moulding can be accomplished using convention techniques, e.g. using a Nestal moulding apparatus. Moulding temperature may be in the range 190 to 230°C, injection times may be in the range 0.2 to 0.5 s with cooling times being of the order of 0.5 to 2 s.

It is a feature of the invention however that by using an HDPE as hereinbefore described, cycle times can be reduced. Cycle times less than 4 s, preferably less than 3.9 secs, e.g. less than 3.8 secs are possible.

Thus, viewed from another aspect the invention provides a process for the preparation of a screw cap comprising injection moulding an HDPE as hereinbefore described wherein the cycle time of the moulding procedure is less than 3.8 s.

By cycle time is meant the time between the injection of polymer into the mould to the ejection of the formed cap from the mould. Thus, with a cycle time of 3.8 seconds injection of polymer into the mould to ejection of the cap occurs in 3.8 seconds. In this time therefore a cap is formed, cooled and ejected from the mould leaving the mould ready to form a further cap.

The invention will now be described further by reference to the following non-limiting Examples.

## Analytical Tests

$MFR_2$ is determined at 190°C using 2.16 kg load according to ISO 1133.

Density is determined using ISO 1183/D

## Environmental stress crack resistance (ESCR)

1) Full notch Creep test (FNCT) was measured according to ISO/DIS 16770.3 at 50°C and 3.5 MPa stress with a notch depth of 1 mm and compression moulded specimen dimensions 123mm x 6 mm x 20 mm. The solvent used was 2 vol% Arkopal N110 in deionized water.

## Tensile properties

Tensile modulus, stress and strain at yield were measured on injection moulded samples according to ISO 527-2: Tensile modulus was measured at a speed of lmm/min

## Mw/Mn

The weight-average molecular weight Mw and the molecular weight distribution (MWD = Mw/Mn, where Mn equals number average molecular weight and Mw equals to weight average molecular weight) is measured by a method based on ISO 16014-4: 2003. A Waters 150CV plus instrument was used with column 3 x HT &E styragel from Waters (divinylbenzene) and trichlorobenzene (TCB) as solvent at 140°C. The column set was calibrated using universal calibration with narrow MWD PS standards. (The Mark Howinks constant K: 9,54*10-5 and a:0,725 for PS, and K: 3,92*10-4 and a:0,725 for PE)

The ratio of Mw and Mn is a measure of the broadness of the distribution, since each is influenced by the opposite end of the "population".

## Charpy impact

This method was applied on injection moulded notched samples according to ISO 179/1eA. The samples are tested at 23°C and at -20°C.

## Comonomer content

Was determined by 13C NMR.

## Spiral test

Spiral Test is carried out using an Engel ES330/65 cc90 injection moulding apparatus with a spiral mould and pressure of 600, 1000 or 1400 bar
screw diameter: 35 mm
max. piston displacement: 150 cm3
spec. injection pressure: 600, 1000, or 1400 bar
tool form: oval form; provided by Axxicon; thickness 2 mm, breadth: 5 mm
temperature in pre-chamber and die: 230°C
temperature in zone 2/zone 3/zone 4/zone 5: 230°C/230°C/225°C/200°C
injection cycle: injection time including holding: 10 s
cooling time: 15 s
injection pressure: Follows from the predetermined length of the testing material. dwell pressure = injection pressure

screw speed: 30 rpm

system pressure: 10 bar

metering path: should be chosen so that the screw stops 20 mm before its final position at the end of the dwell pressure.

tool temperature: 40°C

The spiral flow length can be determined immediately after the injection operation.

**NMR**

The C13NMR spectra were recorded on Bruker 400 MHz spectrometer at 130oC from samples dissolved in 1,2,4-trichlorobenzene/benzene-d6 (90/10 w/w).

**Rheology**

Rheology of the polymers was determined by frequency sweep at 190°C under nitrogen atmosphere according to ISO 6721-10, using Rheometrics RDA II Dynamic Rheometer with parallel plate geometry, 25 mm diameter plate and 1.2 mm gap . The measurements gave storage modulus (G'), loss modulus (G") and complex modulus (G*) together with the complex viscosity ($\eta$*), all as a function of frequency ($\omega$) These parameters are related as follows: For any frequency $\omega$: The complex modulus: $G^* = (G'^2 + G''^2)^{1/2}$ The complex viscosity: $\eta^* = G^*/\omega$.

According to the empirical Cox-Merz rule, for a given polymer and temperature, the complex viscosity as function of frequency (given in rad/s) measured by this dynamic method is the same as the viscosity as a function of shear rate for steady state flow (e.g. a capillary).

Shear thinning, that is the decrease of viscosity with G*, becomes more pronounced when the molecular weight distribution (e.g. as measured by SEC for linear polymers) broadens. This property can be characterised by the shear thinning index, SHI, which is the ratio of the viscosity at a lower stress and the viscosity at a higher shear stress. A polymer with broad molecular weight distribution will have a higher SHI than one with a more narrow. Two polymers of equal molecular weight distribution broadness as seen by SEC, but of different molecular weights, will have about equal SHI. In the examples, shear stresses (or G*) of 5 and 50 kPa were used as basis. Thus:

$$\text{SHI\_1\_kPa/100\_kPa (SHI 1/100)} = \eta^* (G^* = 1 kPa)/\eta^* (G^* = 100 kPa).$$

**Example 1**

Reactor Produced Bimodal HDPE suitable for use in the invention

Into a 500 dm³ loop reactor, operated at 95°C and 57 bar, was continuously introduced 43 kg/hour ethylene, 78 kg/hour propane, hydrogen and the polymerisation catalyst of Example 3 of EP-B-688794 (loaded on 20 micron silica) in a quantity such that PE production rate was 41 kg PE/hour. The amount of hydrogen fed was the amount sufficient to give $MFR_2$ of 30 g/10 min of the product from this loop reactor. The density was estimated to be 970 kg/m³. The polymer (still containing the active catalyst) was separated from the reaction medium and transferred to a fluidised gas phase reactor. This was operated at 85°C and a total pressure of 20 bar. Here additional hydrogen, ethylene and 1-butene comonomer were added so as to, together with the product from the loop reactor, produce a polyethylene at a rate of 82 kg/hour having $MFR_2$ of 6.1 g/10 min and density 964.4 kg/m³. The fraction of high MFR (low MW) material in the total polymer was thus 50%. This polymer corresponds to sample 1 in the table.

Three other samples were also produced in this manner.

Comparison is made to a commercially available bimodal HDPE of density 954 kg/m³ MFR 4 g/10min and tensile modulus 850 MPa.

The properties of samples 1 to 4 are set out in Table 1 below.

Table 1

|  | Sample 1 | Sample 2 | Sample 3 | Sample 4* | CommGrade |
|---|---|---|---|---|---|
| Density (kg/m³) | 964.4 | 966.4 | 960.1 | 959.2 | 954 |
| $MFR_2$(g/10min) | 6.1 | 7.4 | 5.6 | 4.4 | 4 |

(continued)

| Analytical results | | | | | |
|---|---|---|---|---|---|
| $M_W$ (D) | 100.000 | 100.000 | 105.000 | 115.000 | |
| $M_n$ (D) | 15.000 | 13.000 | 15.000 | 16.000 | |
| MWD | 6.7 | 7.7 | 7.0 | 7.2 | |
| eta0.05 (Pa s) | 1636 | 1370 | 1850 | 2360 | |
| eta300 (Pa s) | 350 | 312 | 366 | 416 | |
| SHI 1/100 | 4.2 | 4.3 | 4.2 | 4.5 | 5.7 |
| **Spiral test** | | | | | |
| 600 bar (cm) | 34.1 | 36.1 | 33.1 | 30.8 | 33 |
| 1000 bar (cm) | 48.8 | 51.3 | 47.4 | 44.7 | 47.8 |
| E (Spiral test parameter 1000 bar) E=(Spiral flow length)*$(MFR_2)^{-0.3}$ | 28.4 | 28.1 | 28.3 | 28.7 | 31.5 |
| 1400 bar (cm) | 63.8 | 67.1 | 61.6 | 58.5 | 61.4 |
| **Mechanical properties** | | | | | |
| Tensile modulus (MPa) | 1240 | 1230 | 1120 | 1100 | 870 |
| A=(Tensile modulus) - 27*(Density-960) | 1121 | 1057 | 1117 | 1122 | 1032 |
| Stress at yield (MPa) | 27.3 | 27.5 | 25.8 | 25.6 | 22.5 |
| 13 =(Stress at yield) - 0,35*(Density-960) | 25.76 | 25.26 | 25.765 | 25.88 | 24.6 |
| Strain at yield (%) | 7.7 | 7.7 | 8.1 | 8.2 | 9.8 |
| Charpy 23°C (kJ/m$^2$) | 7.3 | 6.1 | 6.7 | 8 | 7.4 |
| C=(Charpy 23)*(MFR2^0,3) | 12.56 | 11.12 | 11.23 | 12.48 | 11.22 |
| Charpy -20°C (kJ/m$^2$) | 5.5 | 4.3 | 4.6 | 6.6 | 4.2 |
| FNCT (50°C, 3.5 MPa) (h) | 17 | 17 | 18 | 32 | 47 |
| * Not according to the invention. | | | | | |

**Injection Moulded Cap**

Samples 2 and 3 were injection moulded to form caps.

Injection moulding took place in a 120 t Nestal Synergy injection moulding machine employing the conditions below.

Cap Injection Moulding conditions:

Melt temperature: 215°C
Holding Pressure: 825 bar
Holding Time: 1.0 s
Cooling time: 0.7 s
Cycle Time: 3.7 s

The formed caps weighed 1.7 g with a radius of 14.5 mm corresponding to a weight to area ratio of 0.257 g/cm$^2$ and a length of 14 mm. The caps fit the neck finish of a 30/25 low neck bottle.

**Claims**

1. A screw cap comprising a multimodal high density polyethylene (HDPE) having a density of at least 960 kg/m$^3$ ISO 1183/D, an MFR$_2$ of 5 to 8 g/10min ISO 1133 and a tensile modulus greater than 1000 MPa ISO 527-2 wherein the ratio between the weight of the screw cap (g) and the area πr2 where r is the radius of the inside of the screw cap (cm) is less than 0.32 g/cm$^2$.

2. A screw cap as claimed in claim 1 wherein the ratio is less than 0.30 g/cm$^2$.

3. A screw cap as claimed in claim 1 or 2 wherein the tensile modulus of said HDPE is at least 1100 MPa.

4. A screw cap as claimed in any preceding claim weighing less than 2 g.

5. A screw cap as claimed in any preceding claim wherein the radius of the inside of the screw cap is 1.4 to 1.5 cm.

6. A screw cap as claimed in any preceding claim which fits a bottle neck which conforms to the PCO or BPF standard, wherein said bottle neck has a diameter of approximately 28 mm.

7. A screw cap as claimed in any preceding claim which fits a bottle neck which conforms to the 30/25 low (16.8 mm) or 30/25 high (18.5 mm) standard.

8. A screw cap as claimed in any preceding claim which comprises a tear strip.

9. A process for the preparation of a screw cap as described in any preceding claim comprising injection moulding a multimodal HDPE having a density of at least 960 kg/m$^3$, a tensile modulus greater than 1000 and an MFR$_2$ of 5 to 8 g/10min to form a screw cap wherein the ratio between the weight of the screw cap (g) and the area πr$^2$ where r is the radius of the inside of the screw cap (cm) is less than 0.32 g/cm$^2$.

10. A process as claimed in claim 9 wherein the cycle time is less than 4 s.

11. A screw cap comprising a multimodal HDPE having a density of at least 960 kg/m$^3$, a tensile modulus greater than 1000 MPa and an MFR$_2$ of 5 to 8 g/10min wherein the weight of the screw cap is less than 2 g.

**Patentansprüche**

1. Schraubkappe, umfassend ein multimodales Polyethylen hoher Dichter (HDPE) mit einer Dichte von mindestens 960 kg/m$^3$, ISO 1183/D, einem MFR$_2$-Wert von 5 bis 8 g/10 min, ISO 1133, und einen Zugmodul von mehr als 1000 MPa, ISO 527-2, wobei das Verhältnis zwischen dem Gewicht der Schraubkappe (g) und der Fläche πr$^2$, wobei r der Radius der Innenseite der Schraubkappe (cm) ist, weniger als 0,32 g/cm$^2$ beträgt.

2. Schraubkappe nach Anspruch 1, wobei das Verhältnis weniger als 0,30 g/cm$^2$ beträgt.

3. Schraubkappe nach Anspruch 1 oder 2, wobei der Zugmodul des HDPE mindestens 1100 MPa beträgt.

4. Schraubkappe nach einem der vorstehenden Ansprüche, die weniger als 2 g wiegt.

5. Schraubkappe nach einem der vorstehenden Ansprüche, wobei der Radius der Innenseite der Schraubkappe 1,4 bis 1,5 cm beträgt.

6. Schraubkappe nach einem der vorstehenden Ansprüche, die auf einen Flaschenhals paßt, der dem PCO- oder dem B-PF-Standard entspricht, wobei der Flaschenhals einen Durchmesser von etwa 28 mm hat.

7. Schraubkappe nach einem der vorstehenden Ansprüche, die auf einen Flaschenhals paßt, der dem Standard 30/25 niedrig (16,8 mm) oder 30/25 hoch (18,5 mm) entspricht.

8. Schraubkappe nach einem der vorstehenden Ansprüche, die einen Aufreißstreifen aufweist.

**9.** Verfahren zur Herstellung einer Schraubkappe nach einem der vorstehenden Ansprüche, das das Spritzgießen eines multimodalen HDPE mit einer Dichte von mindestens 960 kg/m$^3$, einem Zugmodul von mehr als 1000 und einem MFR$_2$-Wert von 5 bis 8 g/10 min, umfaßt, so daß eine Schraubkappe entsteht, wobei das Verhältnis zwischen dem Gewicht der Schraubkappe (g) und der Fläche πr$^2$, wobei r der Radius der Innenseite der Schraubkappe (cm) ist, weniger als 0,32 g/cm$^2$ beträgt.

**10.** Verfahren nach Anspruch 9, wobei die Zykluszeit weniger als 4 s beträgt.

**11.** Schraubkappe, umfassend ein multimodales HDPE mit einer Dichte von mindestens 960 kg/m$^3$, einem Zugmodul von mehr als 1000 MPa und einem MFR$_2$-Wert von 5 bis 8 g/10 min, wobei das Gewicht der Schraubkappe weniger als 2 g beträgt.

**Revendications**

**1.** Capsule à visser comprenant une composition à base de polymère d'éthylène haute densité (HDPE) multimodal présentant une densité d'au moins 960 kg/m$^3$, ISO 1183/D, un MFR$_2$ de 5 à 8 g/10 min, ISO 1133, et un module d'élasticité en traction supérieur à 1000 MPa, ISO 527-2, dans lequel le rapport entre le poids de la capsule à visser (g) et la surface πr$^2$ où r est le rayon de l'intérieur de la capsule à visser (cm) est inférieur à 0,32 g/cm$^2$.

**2.** Capsule à visser selon la revendication 1, dans lequel le rapport est inférieur à 0,30 g/cm$^2$.

**3.** Capsule à visser selon la revendication 1 ou 2, dans lequel le module d'élasticité en traction dudit HDPE est au moins 1100 MPa.

**4.** Capsule à visser selon l'une quelconque des revendications précédentes pesant moins de 2 g.

**5.** Capsule à visser selon l'une quelconque des revendications précédentes dans lequel le rayon de l'intérieur de la capsule à visser est de 1,4 à 1,5 cm.

**6.** Capsule à visser selon l'une quelconque des revendications précédentes qui passe sur un col de bouteille qui est conforme au standard PCO ou BPF, dans laquelle ledit col de bouteille présente un diamètre d'approximativement 28 mm.

**7.** Capsule à visser selon l'une quelconque des revendications précédentes qui passe sur un col de bouteille qui est conforme au standard 30/25 bague basse (16,8 mm) ou 30/25 bague haute (18,5 mm).

**8.** Capsule à visser selon l'une quelconque des revendications précédentes, qui comprend une languette de déchirage.

**9.** Procédé pour la préparation d'une capsule à visser telle que décrite dans une quelconque des revendications précédentes, comprenant le moulage par injection d'une composition à base de polymère d'éthylène multimodal présentant une densité d'au moins 960 kg/m$^3$, un module d'élasticité en traction supérieur à 1000 et un MFR$_2$ de 5 à 8 g/10 min pour former une capsule à visser, dans lequel le rapport entre le poids de la capsule à visser (g) et la surface πr$^2$ où r est le rayon de l'intérieur de la capsule à visser (cm) est inférieur à 0,32 g/cm$^2$.

**10.** Procédé selon la revendication 9, dans lequel la durée du cycle est inférieure à 4 s.

**11.** Capsule à visser comprenant une composition à base de polymère d'éthylène multimodal présentant une densité d'au moins 960 kg/m$^3$, un module d'élasticité en traction supérieur à 1000 MPa et un MFR$_2$ de 5 à 8 g/10min, dans laquelle le poids de la capsule à visser est inférieur à 2 g.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4489845 A
- US 4709825 A
- EP 1310436 A
- EP 1468932 A
- WO 0071615 A
- EP 1187876 A
- WO 9744371 A
- WO 9618662 A
- EP 688794 A
- EP 688794 B